# EUROPÄISCHE PATENTSCHRIFT

(11) **EP 2 567 758 B1**
(45) Veröffentlichungstag und Bekanntmachung des Hinweises auf die Patenterteilung: **03.06.2015**
(21) Anmeldenummer: 12165534.4
(22) Anmeldetag: 25.04.2012
(51) Int. Cl.: B08B 1/04, B08B 1/00, F24J 2/46, B08B 3/04

(54) **Vorrichtung zum Reinigen von glatten Flächen**
Device for cleaning smooth surfaces
Dispositif de nettoyage de surfaces lisses

(30) Priorität: 09.09.2011 DE 202011105493 U
(43) Veröffentlichungstag der Anmeldung: 13.03.2013
(73) Patentinhaber: Ehleuter, Franz, 87760 Lachen (DE)
(72) Erfinder: Ehleuter, Franz, 87760 Lachen (DE)
(74) Vertreter: Pfister, Stefan Helmut Ulrich

(56) Entgegenhaltungen:
- EP-A1- 2 295 158
- DE-A1- 4 428 734

## Beschreibung

Die Erfindung betrifft eine Vorrichtung zum Reinigen von glatten Flächen, wie zum Beispiel Oberflächen von Solaranlagen, Photovoltaikanlagen, Glasflächen oder dergleichen.

Im Stand der Technik ist eine Reihe von Vorrichtungen zum Reinigen von glatten Flächen, wie zum Oberflächen von Sölaranlagen, Photovoltaikanlagen, Glasflächen oder dergleichen bekannt. Dabei handelt es sich entweder um manuell, das heisst vom Boden aus zu bedienende Vorrichtungen, oder aber um komplizierte Vorrichtungen, die beispielsweise an kompletten Geräten und Fahrzeugen bereits fest montiert sind.

Die zuvor genannten Vorrichtungen zum Reinigen sind beispielsweise auch aus mehreren Druckschriften des Standes der Technik bekannt. Dabei handelt es sich, wie bereits erwähnt, entweder um fest installierte Anlagen beziehungsweise um komplette Geräte, die einen enorm hohen Anschaffungsaufwand für die Betreiber bedeuten. Ein solches Gerät ist beispielsweise aus der WO 2010/142837 A1 bekannt, das gemeinsam mit dem Gerät und dem durchzuführenden Verfahren beschrieben wird. Auch aus der US 2011/0094542 A1 ist ein derartiges Gerät bekannt, welches ebenfalls fest an einem Fahrzeug angebaut ist. Eine gleichartige, sehr aufwendige Vorrichtung ist aus der Deutschen Offenlegungsschrift DE 10 2009 040 778 A1 bekannt. Hier wird ein Reinigungsgerät für Thermosolarkraftwerke beschrieben, welches ebenfalls an einem LKW fest installiert ist. Gleiches ist zu einer Lösung festzuhalten, die in der WO 2010/106195 A1 genannt ist. Die zuvor genannten Geräte beziehungsweise Vorrichtungen sind so konzipiert, dass man dazu ein sehr aufwendiges Antriebsfahrzeug benötigt, welches die Kosten für eine derartige Anschaffung natürlich enorm hoch gestaltet. Die Rendite aus einer solchen Anschaffung wird sich erst nach sehr vielen Einsatzstunden über Jahre einstellen.

Des Weiteren ist aus der WO 2011/029416 A1 eine Solaranlagenreinigungsvorrichtung zur Reinigung der der Sonnenstrahlung zugewandten Seite von Anlagen zur Energiegewinnung durch Sonneneinstrahlung bekannt, wobei als Reinigungsmedium Wasser verwendet wird. Hierbei handelt es sich um eine sehr kompakte Anlage, die auf Führungsschienen beziehungsweise auf Laufrollen über eine zu reinigende Solarfläche geführt werden muss.

Aus der EP 2 228 142 A2 ist eine Vorrichtung zum Reinigen von glatten Flächen bekannt, die eine Reinigungseinheit aufweist, die an einem Gestänge befestigbar ist. Dabei wird die Reinigungseinheit beziehungsweise die Last der Reinigungseinheit über ein Gestänge abgefangen. Die aus der EP 2 228 142 A2 bekannte Lösung ist beispielsweise an einer Hebebühne anordenbar.

Die dort vorgestellte Lösung zeichnet sich dadurch aus, dass eine Abfang- beziehungsweise Verstelleinrichtung an einer Bedienbühne vorgesehen ist, wobei die Abfang- beziehungsweise Verstellvorrichtung an einem Gestänge angreift. Die von der Vorrichtung auf die Fläche eingetragene Last ist über die Abfang- beziehungsweise Verstellvorrichtung einstellbar oder veränderbar.

Aus der EP 2295158-A1 ist eine gattungsgemäße Vorrichtung bekannt, die dem Oberbegriff des Anspruchs 1 zeigt. Die Entwicklung von Solaranlagen, insbesondere von Photovoltaikanlagen, geht derzeit dahin, dass immer größere Anlagen auch im freien Feld aufgestellt werden oder aber auf größeren Flächen, wie zum Beispiel von Industriegebäuden oder aber landwirtschaftlich genutzten Gebäuden. Dabei ist es notwendig, diese Photovoltaikanlagen beziehungsweise auch Solaranlagen in bestimmten Zyklen zu reinigen. Untersuchungen haben ergeben, dass durch die Reinigung der Photovoltaikanlagen beispielsweise eine höhere Ausbeute an erzeugtem Strom erzielt werden kann. Dies kann im günstigsten Fall bis zu 40% des erzeugten Stromes ausmachen. Bei den immer größer werdenden Flächen, insbesondere in sogenannten Solarparks, ist es natürlich auch notwendig, die peripheren Anlagen, also beispielsweise Grasflächen, zu pflegen, so dass die Stromerzeugung nicht durch zu hoch wachsende Gräser und/oder Unkraut oder dergleichen beeinträchtigt wird. Aus diesem Grund besitzen die Betreiber von solchen Solarparks in der Regel ein landwirtschaftliches Gerät, an dem über eine entsprechende Schnittstelle beispielsweise ein Rasenmäher, eine Walze, eine Egge, ein Planierschild oder dergleichen angebaut werden kann.

Um nun den gerätetechnischen Aufwand für das Betreiben der Photovoltaikparks beziehungsweise Solarparks nicht unnötig hoch zu gestalten, ist es im Stand der Technik bekannt, bestimmte Reinigungsgeräte oder Module an Kränen, Baggern, Minibaggern oder dergleichen wechselbar anzuordnen.

Ein weiteres Problem einer Reinigung von Solaranlagen beziehungsweise Photovoltaikanlagen besteht darin, dass beim Bewegen des Fahrzeuges durch die Solarparks in der Regel keine ebenen Flächen als "Fahrbahn" für das Fahrzeug zur Verfügung stehen. Aufgrund dessen wird die Vorrichtung zum Reinigen beim Durchfahren von Bodensenken oder beim Überwinden von Hügeln einen unterschiedlichen Lasteintrag auf die zu reinigende Fläche einbringen. Damit wird natürlich das Reinigungsergebnis beeinträchtigt und zum anderen besteht die Gefahr, dass bei zu hohem Lasteintrag die empfindlichen Oberflächen von Solaranlagen oder Photovoltaikanlagen beschädigt werden könnten.

Ausgehend von diesem Stand der Technik ist es Aufgabe der Erfindung, eine Lösung zur Verfügung zu stellen, die die zuvor genannten Probleme nicht mehr aufweist und die es ermöglicht, eine Reinigungsvorrichtung zur Verfügung zu stellen, die mit relativ geringem Kostenaufwand herstellbar ist und die insbesondere einen gleichen Lasteintrag bei beziehungsweise während der Bewegung von Fahrzeugen ermöglicht.

Die Aufgabe der Erfindung wird gelöst durch eine Vorrichtung zum Reinigen von glatten Flächen gemäß Anspruch 1.

Durch diese Ausgestaltung gelingt es, dass die Reinigungseinheit immer den gleichen Krafteintrag auf die zu reinigende Oberfläche einbringt, egal, ob nun das Fahrzeug durch eine Bodenwelle fährt oder über einen Hügel. Durch die Ausgestaltung der Reinigungseinheit mit der zuvor beschriebenen Lastausgleichseinheit ist dabei die Last, die von der Reinigungseinheit auf die zu reinigende Fläche eingebracht wird, nicht nur einstellbar, und zwar auf unterschiedliche Werte, sondern die Lastausgleichseinheit behält bei Beibehaltung eines einmal eingestellten Wertes diesen auch beim Bewegen des Fahrzeuges stets konstant. Die Reinigungseinheit wird beim Bewegen des Fahrzeugs weder angehoben noch gesenkt. Sie verbleibt in der einmal vorgewählten Stellung beziehungsweise Lage. Damit werden die im Stand der Technik beschriebenen Nachteile, nämlich der unterschiedliche Lasteintrag auf die Fläche beim Bewegen des Fahrzeuges und gegebenenfalls mögliche Beschädigungen, komplett beseitigt. So ist beispielsweise die Reinigungseinheit beziehungsweise die einzubringende Last so einstellbar, dass selbst bei einer Reinigungsbreite von 4 bis 5 Metern die gesamte Reinigungseinheit sich mit zwei Fingern von einer Person bewegen lässt. Selbstverständlich ist natürlich, falls erforderlich, auch ein höherer Lasteintrag möglich. Dazu ist es lediglich notwendig, die Lastausgleichseinheit entsprechend einzustellen.

Die Lösungen des Standes der Technik sind beispielsweise dadurch gekennzeichnet, dass der Lasteintrag der Reinigungseinheit einstellbar ist. Allerdings muss bei diesen Lösungen händisch nachgeregelt werden, wenn beispielsweise Bodenwellen oder Unebenheiten vorkommen, die eben nicht automatisch ausgeglichen werden. Durch die Lastausgleichseinheit nach der Erfindung wird dieses Problem komplett gelöst. Bei anderen Lösungen des Standes der Technik ist es entweder notwendig, entsprechende Führungsschienen für die Reinigungseinheit oder die Last abfangende Fahrgestelle vorzusehen. Dies ist beispielsweise bei fest installierten Reinigungsanlagen der Fall. Auch sind Lösungen, wie vorher beschrieben, im Stand der Technik bekannt, die beispielsweise die Last über Führungsräder beziehungsweise Auflageräder abfangen, die allerdings entweder auf den zu reinigenden Flächen oder aber direkt daneben geführt werden müssen. All diese Nachteil des Standes der Technik treten bei der erfindungsgemäßen Lösung nicht mehr auf. Des Weiteren handelt es sich bei der erfindungsgemäßen Lösung um eine relativ günstig herzustellende Variante einer Reinigungseinheit, die nicht an größere Geräte gebunden ist, sondern an vorhandenen Geräten wie eingangs beschrieben, einsetzbar ist.

Die Lastausgleichseinheit wird nach der Erfindung gebildet von wenigstens einem Druckspeicher, der mit einem Hydraulikzylinder zusammenwirkt. Der Druckspeicher wird dabei als Druckbehälter ausgeführt, der teilweise mit Hydraulikflüssigkeit und teilweise mit einem gasförmigen Medium, wie zum Beispiel Luft oder Stickstoff, beaufschlagt wird. Durch unterschiedliche Druckbeaufschlagung lässt sich dabei auch, wie bereits weiter vorne beschrieben, der Krafteintrag des Reinigungsmoduls bestimmen, welcher auf die zu reinigende Fläche einwirkt. Dabei wird geschickter Weise der Druckspeicher mit einem Hydraulikzylinder verbunden, um so zu gewährleisten, dass über den Hydraulikzylinder die Last des Reinigungsmoduls aufgefangen und/oder ausgeglichen wird. Der Ausgleich erfolgt dann durch Rückkopplung mit dem Druckspeicher, wodurch die bereits beschriebenen Effekte, nämlich immer ein konstanter Lasteintrag auf die zu reinigende Fläche, erreicht wird. Selbstverständlich ist an Stelle von Luft auch eine weitere Möglichkeit gegeben, den Druckspeicher beispielsweise mit anderen gasförmigen Medien zu beaufschlagen. Üblicher Weise verwendet man allerdings Pressluft, weil diese an den landwirtschaftlichen Geräten bereits zur Verfügung steht. Landwirtschaftliche Geräte sind regelmäßig mit einem Druckluftbehälter ausgestattet und einem Kompressor, der diesen ständig befüllt beziehungsweise nachfüllt. Des Weiteren ist an landwirtschaftlichen Geräten, insbesondere dann, wenn die bereits beschriebene Schnittstelle vorhanden ist, in der Regel auch ein Hydraulikkreislauf vorhanden, den man problemlos mit der Vorrichtung zum Reinigen von glatten Flächen verbinden kann. Demzufolge wird bevorzugter Weise als Hydraulikflüssigkeit Hydrauliköl und als pneumatisches Medium Druckluft verwendet werden.

Ein weiterer Vorteil der erfindungsgemäßen Lösung ist der, dass entsprechend der erfindungsgemässen Vorrichtung die Schnittstelle an der Vorrichtung selbst mit einer an landwirtschaftlichen Geräten, wie zum Beispiel an einem Traktor, vorhandenen Gegenschnittstelle verbindbar ist. Derartige Schnittstellen sind auch als Dreipunkt-Anhängerkupplung oder Schnellwechseldreieck bekannt, wie sie beispielsweise in der Landwirtschaft eingesetzt werden. Die Verwendung der universellen Schnittstelle, die beispielsweise dafür vorgesehen ist, um Planierschilder, Rasenmäher, Walzen, Eggen oder dergleichen an einem Traktor oder einem anderen landwirtschaftlichen Gerät anzuschließen, führt dazu, dass der Fahrzeugpark eines Solarparkes kleingehalten werden kann, da man nicht notwendigerweise jetzt eine gesamte neue Vorrichtung mit einem entsprechenden Fahrzeug anschaffen muss, sondern es reicht aus, lediglich die Vorrichtung, wie vorher beschrieben, zusätzlich zu den anderen bereits vorhandenen Geräten dann vorzuhalten. Im Bedarfsfall wird dann das jeweils benötigte Gerät mittels der universellen Schnittstelle an dem Fahrzeug befestigt und kann so benutzt werden. Gegenüber den im Handel beispielsweise angebotenen Reinigungsgeräten mit fest installierter Vorrichtung zum Reinigen ergibt sich natürlich ein erheblicher Kostenvörteil bereits bei der Anschaffung, aber auch später beim Betreiben. Die Wartungskosten können dadurch ebenfalls überschaubar gehalten werden. Die Vorteile liegen demzufolge auf der Hand.

Vorteilhaft ist der Hydraulikzylinder mit einem Gelenk an der Schnittstelle beziehungsweise dem die Schnittstelle bildenden Gestell und der Reinigungseinheit, bevorzugt über einen Tragarm sowie einem dort vorgesehen Ausgleichsgelenk verbunden. Durch diese Ausgestaltung gelingt es, dass der Hydraulikzylinder sowohl an der Schnittstelle als auch an der Reinigungseinheit, bevorzugt an dem Tragarm der Reinigungseinheit angreift und so für den Ausgleich sorgt. Das heisst, der Hydraulikzylinder ist völlig unabhängig von anderen Verstellzylindern dort vorgesehen und sorgt tatsächlich nur für den Lastenausgleich. Dies erfolgt so, wie vorher beschrieben, nämlich, indem der Hydraulikzylinder mit dem Druckspeicher verbunden ist, wodurch gewährleistet ist, dass ständig die gleiche Last beziehungsweise der gleiche Druck auf die zu reinigende Fläche aufgebracht wird.

Der Druckspeicher ist als Hydraulikdruckspeicher ausgebildet, der mittels eines pneumatischen Mediums mit Druck beaufschlagbar ist. Dabei hat es sich bewährt, als Hydraulikmedium Hydrauliköl und als Pneumatikmedium Druckluft, Stickstoff oder dergleichen zu verwenden. Selbstverständlich schließt diese Ausgestaltung die Verwendung anderer Hydraulikmedien beziehungsweise anderer pneumatischer Medien nicht aus. Die beschriebene Ausführungsform ist jedoch bevorzug, da die landwirtschaftlichen Geräte in der Regel über einen Hydraulikkreislauf bereits verfügen. Des Weiteren verfügen die landwirtschaftlichen Geräte auch über entsprechende Drucklufterzeuger und einen entsprechenden Druckluftbehälter, so dass hier die Ankopplung der Reinigungsvorrichtung als Modul relativ einfach zu gewährleisten ist. Eine nicht erfindungsgemäße Ausführung umfasst eine Lösung, bei der alle notwendigen Medien und die entsprechenden Druckerzeugungsmittel an der Vorrichtung selbst vorgesehen sind, damit ein autarkes Arbeiten, das heisst, unabhängig von dem jeweiligen Fahrzeug, möglich ist.

In einer Weiterbildung schlägt die Erfindung vor, dass der Druckspeicher der Vorrichtung eine Druckregeleinrichtung zur Einstellung und/oder Regelung des Drucks des Pneumatikmediums und/oder des Hydraulikmediums aufweist. Durch diese Druckregeleinrichtung gelingt es, erstens den Druck des Druckspeichers in Verbindung mit dem Hydraulikzylinder der Lastausgleichseinheit auf einen vorbestimmten Wert einzustellen und diesen dann zu halten. Die auf die zu reinigende Fläche einzubringende Last beziehungsweise Kraft lässt sich dadurch auch entsprechend der jeweilig verwendeten Reinigungsbürste und des Gewichts der Vorrichtung selbst jeweils einstellen. Die Lastausgleichseinheit gewährleistet dann, nachdem diese einmal eingestellt ist, einen stets gleichen Eintrag der Last, egal, in welcher Lage sich das Fahrzeug gerade befindet.

Gemäß einer Weiterbildung zeichnet sich die Erfindung auch dadurch aus, dass wenigstens ein Steuer- und Verteilerblock zur Steuerung und Verteilung des Hydraulikmediums vorgesehen ist. In gleicher Weise ist selbstverständlich die Möglichkeit gegeben, entsprechende pneumatische Verteiler in Verbindung mit dem Druckspeicher dort vorzusehen. Dieser Steuer- und Verteilerblock kann zum einen dazu genutzt werden, dass autark, das heisst unabhängig von dem Fahrzeug, die Vorrichtung eingestellt und gesteuert werden kann. Selbstverständlich ist es auch möglich, einen an dem Fahrzeug vorhanden oder einzubauenden Steuer- und Verteilerblock zusätzlich oder alternativ zur Steuerung und Einstellung der Vorrichtung zu verwenden.

Ein weiterer Aspekt der erfindungsgemäßen Vorrichtung ist dadurch angegeben, dass die Reinigungseinheit von einem Tragarm gehalten ist, der gelenkig mit der Schnittstelle beziehungsweise mit einem an der Schnittstelle angeordneten Schnittstellengelenk verbunden ist. Durch die Ausgestaltung mit einem Tragarm ist es möglich, ähnlich wie bei einem normalen Lastaufnahmemittel, die Reinigungseinheit in eine gewünschte Position zu bringen, das heißt, anzuheben und zu verschwenken und dann wieder auf die zu reinigende Fläche abzusenken. Dabei ist es von Vorteil, wenn die Reinigungseinheit an dem Tragarm ebenfalls über ein Gelenk gehalten ist. Ein weiterer Vorteil ist der, dass es die Ausgestaltung nach der Erfindung ermöglicht, das oder die Gelenke jeweils in bestimmten Stellungen festzustellen beziehungsweise zu fixieren, um eine einmal eingenommene Stellung beziehungsweise Winkel dann zu halten. Da die Reinigungseinheit aufgrund der Lastausgleichseinheit ja immer einen gleichbleibenden Druck auf die zu reinigende Fläche ausübt, kann man durchaus die Gelenke so gestalten, dass man sie in bestimmten Winkellagen dann fixiert, ohne dass hier irgendwelche Schäden befürchtet werden müssen

Die Reinigungseinheit nach der Erfindung hat vorteilhafter Weise wenigstens eine Reinigungsbürste, die gemäß einer Ausführungsform als um eine Achse beziehungsweise Welle rotierende Bürste länglicher Ausgestaltung vorgesehen ist. Dabei umfasst eine nicht erfindungsgemäße Ausgestaltung der Reinigungseinheit sowohl eine Lösung, bei der die Achse der Reinigungseinheit parallel zur zu reinigenden Fläche verläuft, oder aber auch eine Lösung, bei der wenigstens eine rotierende Bürste vorgesehen ist, deren Drehachse sich in im wesentlichen senkrechter Richtung zu der zu reinigenden Fläche erstreckt. Dabei ist es bevorzugt, wenn hier ein Winkel von in etwa 90° einhalten wird. Bei einer Ausgestaltung mit einer senkrechten Achse der Reinigungsbürste ist es von Vorteil, wenn hier wenigstens zwei Bürsten gegeneinander drehbar vorgesehen sind. Die Ausgestaltung mit einer parallel zur zu reinigenden Fläche angeordneten Achse sieht in der Regel vor, dass nur eine Bürste vorgesehen ist, die ebenfalls rotiert.

Von Vorteil ist es dabei, wenn ein Antriebsmotor die Bürste oder die Bürsten antreibt. Von Vorteil ist es, wenn als Antriebsmotor ein Hydraulikmotor, ein Elektromotor oder ein Pneumatikmotor vorgesehen ist. Diese Medien stehen an den Fahrzeugen der in Rede stehenden Art in der Regel zur Verfügung, so dass hier eine gesonderte Bereitstellung der Versorgung des Antriebsmotors mit Energie nicht notwendig ist. Natürlich ist es auch möglich, einen Verbrennungsmotor als Antriebsmotor der Bürste einzusetzen. Bevorzugt ist allerdings die Ausgestaltung, bei der ein Hydraulikmotor oder ein sogenannter Luftmotor die Bürste antreibt.

Wie bereits erwähnt, ist es von Vorteil, wenn das Schnittstellengelenk oder das Gelenk am Tragarm selbst oder beide einstell- und/oder fixierbar ausgebildet ist/sind. Die damit zu erzielenden Vorteile wurden bereits beschrieben.

Die Erfindung schlägt in einer geschickten Weiterbildung auch vor, dass ein Tragarmgelenk vorgesehen ist, mittels dessen der Tragarm von einer Gebrauchsstellung in eine Transportstellung oder umgekehrt klappbar ist. Damit hat man nicht das Problem, dass man die Vorrichtung sehr aufwendig erst in eine bestimmte Transportstellung bringen muß. Dies gelingt in einfacher Art und Weise durch dieses Tragarmgelenk, mittels dessen die Reinigungseinheit beispielsweise in Fahrtrichtung verschwenkbar und am Fahrzeug dann fixierbar ist. Gelangt das Fahrzeug dann an den nächsten Einsatzort, kann man das Prozedere umgekehrt vornehmen, indem das Tragarmgelenk dann wieder in die Normalstellung verschwenkt wird. Dort wird es dann entweder mechanisch und/oder hydraulisch fixiert, wodurch dann der Einsatz wieder gewährleistet ist.

Die Vorrichtung schlägt in einer weiteren geschickten Variante auch vor, dass an dem die Schnittstelle bildenden Gestell ein Verschwenkzylinder angeordnet ist, mittels dessen die Reinigungseinheit gemeinsam mit dem Tragarm seitlich, das heißt, in Gebrauchsstellung im wesentlichen waagerecht beziehungsweise horizontal verschwenkbar ist. Dabei kann man mit dem Verschwenkzylinder die gesamte Vorrichtung im wesentlichen nahezu um 180° vor dem Fahrzeug beziehungsweise vor der Schnittstelle verschwenken. Damit ist es möglich, im bestimmungsgemäßen Einsatz jede gewünschte Stellung seitlich und/oder vor dem Fahrzeug einzustellen. Die Verschwenkbarkeit erfolgt dabei natürlich über ein entsprechendes Verschwenkgelenk, welches beispielsweise an der Schnittstelle beziehungsweise dem die Schnittstelle bildenden Gestell angeordnet ist.

Eine Variante der Erfindung umfasst selbstverständlich auch eine Höhenverstelleinrichtung, die hier durch einen Höhenverstellzylinder an dem Tragarm vorgesehen ist, wobei der Höhenverstellzylinder sowohl an dem Tragarm als auch an dem die Schnittstelle bildenden Gestell angreift. Dadurch gelingt es, diesen Tragarm gemeinsam mit der Reinigungseinheit im wesentlichen vertikal beziehungsweise senkrecht zu verstellen, dadurch ist es jetzt gegeben, dass alle Einstellmöglichkeiten für die erfindungsgemäße Vorrichtung an der Vorrichtung selbst vorhanden sind, so dass ein Einsatz in nahezu allen Winkellagen möglich ist.

In einer Weiterbildung der erfindungsgemässen Vorrichtung ist es vorgesehen, dass die Vorrichtung mit einem Flüssigkeitsbehälter verbindbar ist, um Reinigungs- und/oder Versiegelungsflüssigkeit auf die zu reinigende Fläche und/oder die Reinigungseinheit zu fördern. Dazu ist es nach der Erfindung selbstverständlich vorgesehen, eine Sprühvorrichtung beispielsweise ein Sprühroh so anzuordnen, dass die Reinigungsflüssigkeit entweder auf die Bürste oder aber direkt auf die zu reinigende Fläche gelangt. Dabei spielt es nach der Erfindung zunächst keine Rolle, ob der Flüssigkeitsbehälter für die Reinigungs- und/oder Versiegelungsflüssigkeit als zusätzliches Gerät beziehungsweise zusätzlicher Wagen zum Ankoppeln an das Fahrzeug ausgebildet ist oder ob die Vorrichtung diesen Flüssigkeitsbehälter selbst trägt. Bevorzugt ist natürlich ein modulartiger Aufbau, der es ermöglicht, bestimmte Module je nach Kundenwunsch noch zu ergänzen. Sollte beispielsweise eine Besprühanlage vorhanden sein, ist es selbstverständlich nicht notwendig, die Vorrichtung zum Reinigen mit einer zusätzlichen Sprüheinrichtung zu versehen. In der Regel sind allerdings die neuen Solarparks so konzipiert, dass keine Berieselungsanlagen vorgesehen sind, so dass es durchaus sinnvoll ist, einen Flüssigkeitsbehälter vorzusehen, der natürlich auch über eine entsprechende Pumpe zum Pumpen der Flüssigkeit verfügt.

Die Erfindung geht dabei von verschiedenen Möglichkeiten aus. So ist es entsprechend einer Weiterbildung vorgesehen, dass der Flüssigkeitsbehälter als Anhängeelement ausgestattet ist. In einer weiteren Variante ist es, wie bereits erwähnt, vorgesehen den Flüssigkeitsbehälter als Anhängeelement oder als Aufsatz beziehungsweise Ankoppelungselement auszubilden.

Entsprechend einer Variante der Erfindung ist es weiterhin von Vorteil , wenn an dem Flüssigkeitsbehälter beziehungsweise an der Vorrichtung selbst eine Auffang- und/oder Aufbereitungsvorrichtung vorgesehen ist, die verschmutzte Reinigungsflüssigkeit auffängt und vorzugsweise zur Wiederverwendung aufbereitet. Vorteilhafterweise ist es so, dass man beispielsweise an der Reinigungseinheit der erfindungsgemässen Vorrichtung eine Auffang beziehungsweise Absaugeinheit anbringt, die die benutzte Reinigungsflüssigkeit dann auffängt und in den Flüssigkeitsbehälter beziehungsweise in einen Auffangbehälter zurück leitet. Dort kann dann beispielsweise in einem nächsten Schritt eine Aufbereitungsstufe vorgesehen sein, innerhalb derer die verschmutzte Reinigungsflüssigkeit zur Wiederverwendung aufbereitet wird. Selbstverständlich ist es auch möglich an dem

Flüssigkeitsbehälter noch eine Aufbereitungsvorrichtung vorzusehen, die beispielsweise eine Reinigungs- und/oder Versiegelungsflüssigkeit der Reinigungsflüssigkeit zusetzt.

Nach der Erfindung ist es selbstveständlich auch möglich, einen zusätzlichen Behälter für die Reinigungs- beziehungsweise Versiegelungsflüssigkeit vorzusehen, wenn man ein Vermischen vor dem Aufbringen vermeiden möchte.

Die Erfindung betrifft auch ein landwirtschaftliches Nutzgerät, wie zum Beispiel einen Traktor, mit einer universellen Schnittstelle zum Beispiel einer Dreipunkt-Anhängekupplung beziehungsweise einem Schnellwechseldreieck mit wenigstens einer Vorrichtung, wie vorher beschrieben.

In der Zeichnung ist die Erfindung insbesondere in einem Ausführungsbeispiel schematisch dargestellt. Es zeigen:
- Fig. 1: eine Ausführungsform der erfindungsgemäßen Vorrichtung
- Fig. 2: Einzelteildarstellung der Ausführungsform nach Fig. 1

In den Figuren sind gleiche oder einander entsprechende Elemente jeweils mit den gleichen Bezugszeichen bezeichnet und werden daher, sofern nicht zweckmäßig, nicht erneut beschrieben.

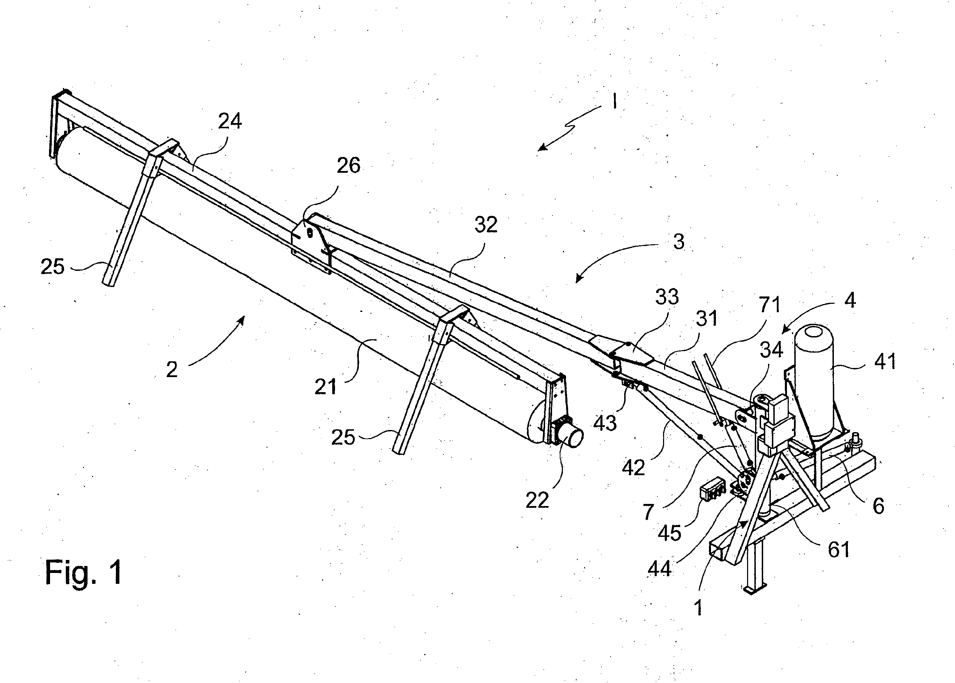

In Fig. 1 ist ein Ausführungsbeispiel für eine Vorrichtung zum Reinigen von glatten Flächen nach der Erfindung gezeigt. Dabei ist die Vorrichtung mit dem Bezugszeichen I und einem geschwungenen Pfeil schematisch angedeutet. Die Vorrichtung I besteht aus einer Reinigungseinheit 2, die ebenfalls mit einem Pfeil bezeichnet ist. Des Weiteren ist die Vorrichtung gebildet von einem weiteren Hauptbestandteil, nämlich der Schnittstelle 1, die ebenfalls mit einem Pfeil schematisch angedeutet ist. Die Reinigungseinheit 2 ist über ein Gelenk 26 an einem Tragarm 31, 32 befestigt. Dabei besitzt der Tragarm 32 ein Tragarmgelenk 33, welches als Klappgelenk ausgebildet ist und welches zumindest in zwei Stellungen fixierbar ist. Die Schnittstelle 1 ist, wie in der Beschreibung bereits weiter vorne beschrieben, als Schnittstelle zu einer an landwirtschaftlichen Geräten, wie zum Beispiel einem Traktor, vorhandenen Gegenschnittstellen kompatibel. Dabei geht man erfindungsgemäss den Weg, dass man genau die Schnittstelle verwendet, die an bereits vorhandenen Anbaugeräten für die Landwirtschaft vorhanden ist. Es handelt sich dabei um Schnittstellen zum Anbau von Rasenmähern, Heuwendern, Walzen, Baggerschaufeln, Planierschildern oder dergleichen. Derartige Schnittstellen sind auch als Dreipunkt-Anhängerkupplung beziehungsweise als Schnellwechseldreieck bekannt. Der Vorteil ist der, dass man als Fahrzeug nicht noch ein weiteres zusätzliches Fahrzeug vorhalten muss, welches beispielsweise am Markt mehr als EUR 70.000,00 kosten wird. Die erfindungsgemässe Vorrichtung reduziert diesen Aufwand erheblich, da letztendlich hier nur ein zusätzliches Anbaugerät vorgehalten werden muss, welches kostengünstiger zu erhalten ist, als eine gesamte Vorrichtung mit Fahrzeug.

An der Schnittstelle 1 ist dabei auch der Tragarm 31, 32 gelenkig über das Schnittstellengelenk 34 verbunden. An dem Tragarm 31,32 ist über das Reinigungseinheitgelenk 26 mit einem Tragegestell 24 gelenkig verbunden. Bevorzugt ist das Reinigungseinheitsgelenk 26 in unterschiedlichen Winkelstellungen feststellbar beziehungsweise fixierbar, so dass ein labiles Hin- und Herschwenken der Reinigungseinheit 2 während des bestimmungsgemässen Einsatzes nicht erfolgen kann. An dem Tragegestell 24 ist über entsprechende Verbindungsbleche, die nicht näher bezeichnet sind, eine Reinigungsbürste 21 drehbar gelagert. Die Reinigungsbürste 21 ist dabei um eine in Fig. 1 nicht gezeigte Welle 23 drehbar gelagert. Ein Antriebsmotor 22 treibt dabei die Bürste an. Als Antriebsmotor 22 kann dabei erfindungsgemäss entweder ein Hydraulikmotor, ein Elektromotor oder ein Pneumatikmotor vorgesehen sein. Selbstverständlich ist es rein theoretisch nach der Erfindung auch möglich, dort einen Verbrennungsmotor vorzusehen. Bevorzugt wird man jedoch einen Hydraulik- oder Pneumatikmotor verwenden, da diese Medien an landwirtschaftlichen Geräten, wie weiter vorn bereits beschrieben, in der Regel zur Verfügung stehen.

Das Schnittstellengelenk 34, welches den Tragarm 31,32 mit der Schnittstelle 1 verbindet, ist ebenfalls in unterschiedlichen Stellungen, das heisst in beliebigen Stellungen, festlegbar beziehungsweise fixierbar. Die Schnittstelle 1 wird dabei von einem dreieckförmigen Gestell gebildet, welches eine nicht näher bezeichnete Konsole mit umfasst. An diesem Gestell beziehungsweise der Konsole greifen dann alle Elemente der erfindungsgemässen Vorrichtung I an. So kann beispielsweise ein Höhenverstellzylinder 7 vorgesehen sein, der über einen Drehbolzen, der beispielsweise an dem Gelenk 44 vorgesehen sein kann, gelenkig angreift und des Weiteren mit dem Tragarm 31,32 verbunden ist. Damit dient der Höhenverstellzylinder 7 lediglich der vertikalen Verstellung des Tragarms 31,32. Die Lastausgleichseinheit 4 ist nach der Erfindung gebildet von wenigstens einem Druckspeicher 41, der über hier nicht gezeigte Verbindungsleitungen mit dem Hydraulikzylinder 42 verbunden ist und so mit diesem zusammenwirkt. Der Druckspeicher 41 weist dabei sowohl eine Flüssigkeitskomponente, als auch eine pneumatische Komponente auf. Das heisst, dass das flüssige Medium über ein Gaspolster abgefedert beziehungsweise der dort vorhandene Druck gespeichert wird. Durch diese geschickte Art und Weise der Anordnung des Hydraulikzylinders 42, der ebenfalls über das Gelenk 44 und dem Ausgleichsgelenk 43 mit dem Tragarm 31,32 verbunden ist, gelingt es, diesen in einer konstanter Lage zu halten und insbesondere die durch die Vorrichtung auf die zu reinigende Fläche einzubringende Last immer konstant zu halten. Im bestimmungsgemässen Einsatz sind dabei die Ausgleichsgelenke nicht fixiert. Dabei wird kein Federn verursacht, sondern die Lastausgleichseinheit gleicht jede Bodenwelle und jeden Hügel aufgrund der Ausführung des Druckspeichers entsprechend aus.

In der Fig. 1 ist ebenfalls ohne Verbindungsleitungen zu irgendwelchen Hydraulikanschlüssen ein Steuer- und Verteilerblock 45 zur Steuerung und Verteilung des Hydraulikmediums vorgesehen. Dieser wird natürlich mit den entsprechenden Leitungen beziehungsweise Schläuchen verbunden, um die Verbindung zu einer Druckerzeugungsstelle für das Hydraulik und/oder Pneumatikmedium herzustellen. Über den Steuer- und Verteilerblock 45 ist es demnach möglich, die Vorrichtung autark, das heisst, an der Vorrichtung selbst zu bedienen. Selbstverständlich kann man diesen Steuer- und Verteilerblock auch mit einem weiteren Steuer- und Verteilerblock verbinden, der beispielsweise an dem Fahrzeug vorgesehen ist. Man kann diese Blöcke dann sozusagen wahlweise bedienen. An der Schnittstelle 1 beziehungsweise an dem die Schnittstelle bildenden Gestell ist des Weiteren ein Verschwenkzylinder 6 angeordnet. Dieser Verschwenkzylinder 6 greift zum einen an der Konsole der Schnittstelle 1 an und zum anderen an dem Verschwenkgelenk 61. Dadurch wird ein Verschwenken in im wesentlichen horizontaler Richtung ermöglicht. Somit sind jetzt alle Verstellmöglichkeiten gegeben, so dass die Vorrichtung universell auf jede gewünschte Reinigungsstellung entsprechend der jeweiligen Anlage einstellbar ist. Mit dem Bezugszeichen 25 sind lediglich abnehmbare Abstellböcke gezeigt, um die Bürste in Nichtgebrauchsstellung abstellen zu können beziehungsweise die gesamte Vorrichtung abstellen zu können. Dazu ist beispielsweise auch an der Konsole der Schnittstelle 1 eine weitere Stütze vorgesehen, die zum Boden weist.

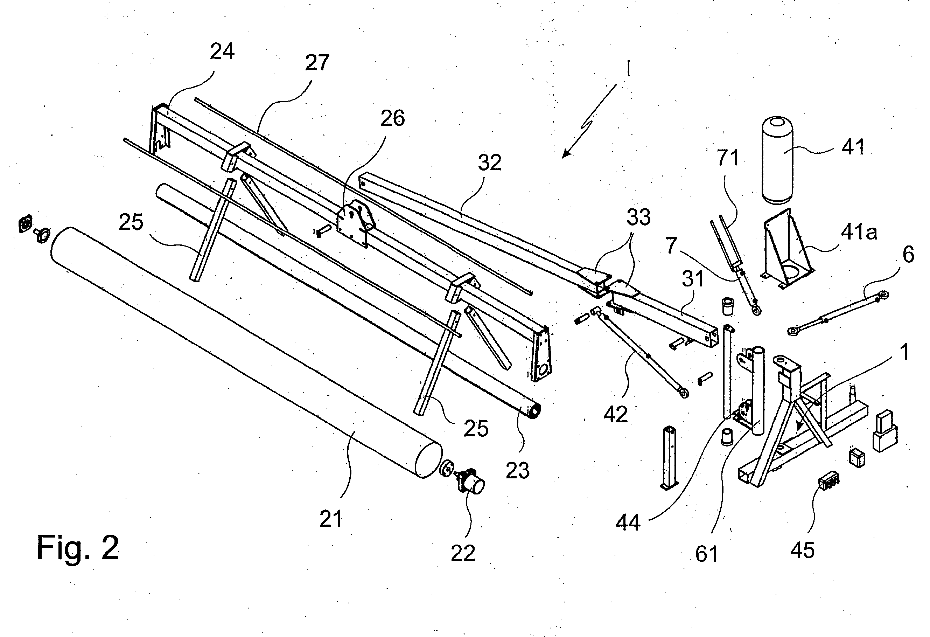

In der Fig. 2 sind die gleichen Bezugszeichen verwendet worden, wie sie in der Fig. 1 bereits vorgestellt worden sind. Fig. 2 hat allerdings den Vorteil, dass man die Einzelteile aufgrund der Darstellung sehr gut erkennen kann. Damit wird auch die Funktionsweise insgesamt noch deutlicher. Mit dem Bezugszeichen 27 ist hier auch ein Sprührohr gezeigt, welches nach dem Zusammenbau in dem Traggestell 24 beispielsweise angeordnet werden kann.

Es ist weiter zu beachten, daß die in den verschiedenen Ausführungsformen beschriebenen und in den Figuren gezeigten Augestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen

## Patentansprüche

1. Vorrichtung, geeignet zum Reinigen von glatten Flächen, wobei die Vorrichtung eine Schnittstelle (1) zum Verbinden mit einem Fahrzeug, wie zum Beispiel einem Bagger, einem Kran, einem LKW, einem Traktor, Kleinbagger, einer Hebebühne oder einem Elektrofahrzeug, aufweist, mittels derer die Vorrichtung lösbar und fest mit dem Fahrzeug verbindbar ist, wobei die Schnittstelle (1) mit einer an landwirtschaftlichen Geräten, wie z.B. einem Traktor, vorhandenen Gegenschnittstelle verbindbar ist und die Vorrichtung zumindest eine Reinigungseinheit (2) aufweist, die auf die zu reinigende Fläche aufsetzbar ist, wobei die Reinigungseinheit (2) mit wenigstens einer Lastausgleichseinheit (4) zusammenwirkt, mittels derer die auf die zu reinigende Fläche aufzubringende Last auf einen vorwählbaren Wert einstellbar ist, wobei die Vorrichtung zum Reinigen von Oberflächen von Solaranlagen, Photovoltaikanlagen, Glasflächen geeignet ist und die Lastausgleichseinheit (4) den vorgewählten Wert beim Bewegen des Fahrzeuges konstant hält, **dadurch gekennzeichnet, dass** die Lastausgleichseinheit von wenigstens einem Druckspeicher (41) gebildet ist, der umzeichen Hydraulikzylinder (42) zusammenwirkt und der Druckspeicher (41) als Hydraulikdruckspeicher ausgebildet ist, der mittels eines pneumatischen Mediums mit Druck beaufschlagbar ist.

2. Vorrichtung nach Anspruch 1, **dadurch gekennzeichnet, dass** der Hydraulikzylinder (42) mit einem Gelenk (44) an der Schnittstelle (1) beziehungsweise dem die Schnittstelle bildenden Gestell und der Reinigungseinheit (2), bevorzugt über einen Tragarm (31,32) sowie einem dort vorgesehenen Ausgleichsgelenk (43) verbunden ist und/oder die Reinigungseinheit (2) von einem Tragarm (31, 32) gehalten ist, der gelenkig mit der Schnittstelle (1) beziehungsweise mit dem an der Schnittstelle angeordneten Schnittstellengelenk (34) verbunden ist.

3. Vorrichtung nach einem der vorhergehenden Ansprüche, **dadurch gekennzeichnet, dass** als Hydraulik-Medium Hydrauliköl und als Pneumatikmedium Druckluft, Stickstoff oder dergleichen vorgesehen sind, bevorzugt der Druckspeicher (41) eine Druckregeleinrichtung zur Einstellung und/oder Regelung des Drucks des Pneumatikmediums und/oder des Hydraulikmediums aufweist.

4. Vorrichtung nach einem der vorhergehenden Ansprüche, **dadurch gekennzeichnet, dass** wenigstens ein Steuer- und Verteilerblock (45) zur Steuerung und Verteilung des Hydraulikmediums vorgesehen ist.

5. Vorrichtung nach einem der vorhergehenden Ansprüche, **dadurch gekennzeichnet, dass** die Reinigungseinheit (2) eine Reinigungsbürste (21) umfasst, die an einem Traggestell (24) um eine Achse oder Welle (23) drehbar gelagert angeordnet ist.

6. Vorrichtung nach einem der vorhergehenden Ansprüche, **dadurch gekennzeichnet, dass** ein Antriebsmotor (22) die Bürste (21) antreibt oder als Antriebsmotor (22), ein Hydraulikmotor, Elektromotor, ein Verbrennungsmotor oder Pneumatikmotor vorgesehen ist.

7. Vorrichtung nach einem der vorhergehenden Ansprüche, **dadurch gekennzeichnet, dass** das Schnittstellengelenk (34) einstell-und/oder fixierbar ausgebildet ist.

8. Vorrichtung nach einem der vorhergehenden Ansprüche, **dadurch gekennzeichnet, dass** ein Tragarmgelenk (33) vorgesehen ist, mittels dessen dieser von einer Gebrauchsstellung in eine Transportstellung oder umgekehrt klappbar ist und/oder an dem die Schnittstelle (1) bildenden Gestell ein Verschwenkzylinder (6) angeordnet ist, mittels dessen die Reinigungseinheit (2) gemeinsam mit dem Tragarm (31,32) seitlich, das heißt, in Gebrauchsstellung im Wesentlichen waagerecht oder horizontal verschwenkbar ist, wobei für die seitliche Verschwenkbarkeit ein Verschwenkgelenk (61) vorgesehen ist.

9. Vorrichtung nach einem der vorhergehenden Ansprüche, **dadurch gekennzeichnet, dass** ein Höhenverstellzylinder (7) an dem Tragarm (31,32) und an dem die Schnittstelle (1) bildenden Gestell angreift, um diesen gemeinsam mit der Reinigungseinheit (2) im Wesentlichen vertikal oder senkrecht zu verstellen.

10. Vorrichtung nach einem der vorhergehenden Ansprüche, **dadurch gekennzeichnet, dass** die Vorrichtung (I) mit einem Flüssigkeitsbehälter verbindbar ist, um Reinigungs- und/öder Versiegelungsflüssigkeit auf die zu reinigende Fläche und/oder die Reinigungseinheit (2) zu fördern.

11. Vorrichtung nach einem der vorhergehenden Ansprüche, **dadurch gekennzeichnet, dass** der Flüssigkeitsbehälter als Anhängeelement oder als Aufsatz- beziehungsweise Ankoppelungselement vorgesehen ist.

12. Vorrichtung nach einem der vorhergehenden Ansprüche, **dadurch gekennzeichnet, dass** an dem Flüssigkeitsbehälter eine Auffang-und/oder Aufbereitungsvorrichtung vorgesehen ist, die verschmutzte Reinigungsflüssigkeit auffängt und vorzugsweise zur Wiederverwendung aufbereitet.

13. Landwirtschaftliches Nutzgerät, wie ein Traktor, mit einer universellen Schnittstelle (1), als eine Dreipunkt-Anhängerkupplung oder einem Schnellwechseldreieck und wenigstens einer Vorrichtung nach einem der vorhergehenden Ansprüche.

## Claims

1. An apparatus for cleaning smooth surfaces, wherein the apparatus has an interface (1) for connection to a vehicle such as an excavator, a crane, a truck, a tractor, a mini-excavator, a hydraulic lift or an electric vehicle, by means of which the apparatus can be fixedly connected to and released from the vehicle, wherein the interface (1) can be connected to an opposing interface provided on agricultural devices such as a tractor, for example, and the apparatus has at least one cleaning unit (2), which can be placed on the surface to be cleaned, wherein the cleaning unit (2) cooperates with at least one load-balancing unit (4) by means of which the load to be applied to the surface to be cleaned can be adjusted to a pre-selectable level, wherein the apparatus is suitable for cleaning surfaces of solar systems, photovoltaic systems and glass surfaces, and the load-balancing unit (4) keeps the preselected value constant during movement of the vehicle, **characterized in that** the load-balancing unit is formed by at least one pressure accumulator (41), which cooperates with a hydraulic cylinder (42), and the pressure accumulator (41) is designed as a hydraulic pressure accumulator, which can be acted upon by pressure by means of a pneumatic medium.

2. The apparatus according to Claim 1, **characterized in that** the hydraulic cylinder (42) is connected to the cleaning unit (2) and also to a joint (44) on the interface (1) and/or to the frame forming the interface, preferably being connected by means of a supporting arm (31, 32) as well as an balancing joint (43), which is provided there, and/or the cleaning unit (2) is held by a supporting arm (31, 32), which to the interface (1) by an articulated joint and/or is connected to the interface joint (34) arranged on the interface.

3. The apparatus according to any one of the preceding claims, **characterized in that** hydraulic oil is provided as the hydraulic medium, and compressed air, nitrogen or the like is provided as the pneumatic medium, the pressure accumulator (41) preferably having a pressure-regulating device for adjusting and/or regulating the pressure of the pneumatic medium and/or of the hydraulic medium.

4. The apparatus according to any one of the preceding claims, **characterized in that** at least one control and distributor block (45) is provided for controlling and distributing the hydraulic medium.

5. The apparatus according to any one of the preceding claims, **characterized in that** the cleaning unit (2) comprises a cleaning brush (21), which is arranged so that it is mounted on a carrying frame (24) to rotate about an axis or a shaft (23).

6. The apparatus according to any one of the preceding claims, **characterized in that** a drive motor (22) drives the brush (21) or is provided as a drive motor (22), a hydraulic motor, an electric motor, an internal combustion engine or a pneumatic motor.

7. The apparatus according to any one of the preceding claims, **characterized in that** the interface joint (34) is designed to be adjustable and/or affixable.#

8. The apparatus according to any one of the preceding claims, **characterized in that** a carrier arm joint (33) is provided, by means of which it can be folded from a use position into a transport position or vice versa and/or a pivoting cylinder (6) by means of which the cleaning unit (2) can be pivoted jointly with the carrier arm (31, 32) laterally, i.e., essentially horizontally, in the use position, is provided on the frame forming the interface (1), wherein a pivoting joint (61) is provided for the lateral pivotability.

9. The apparatus according to any one of the preceding claims, **characterized in that** a height-adjusting cylinder (7) acts on the carrier arms (31, 32) and on the frame forming the interface (1), so that the height-adjusting cylinder can be adjusted jointly with the cleaning unit (2) essentially vertically.

10. The apparatus according to any one of the preceding claims, **characterized in that** the apparatus (T) can be connected to a fluid container to convey cleaning fluid and/or sealing fluid onto the surface to be cleaned and/or onto the cleaning unit (2).

11. The apparatus according to any one of the preceding claims, **characterized in that** the fluid container is provided as a suspension element or as an attachment element and/or as a coupling element.

12. The apparatus according to any one of the preceding claims, **characterized in that** a collecting device and/or a preparation device is provided on the fluid container, collecting the soiled cleaning fluid and preferably processing it for reuse.

13. An agricultural light-duty device, such as a tractor, having a universal interface (1), as a three-point tractor hitch or a quick-change triangle and at least one apparatus according to any one of the preceding claims.

## Revendications

1. Dispositif conçu pour nettoyer des surfaces lisses, où le dispositif comporte une interface (1) de raccordement à un véhicule, comme par exemple une pelle mécanique, une grue, un camion, un tracteur, une petite voiture, une plateforme élévatrice ou un véhicule électrique, au moyen de laquelle le dispositif est lié de façon solide et détachable au véhicule, l'interface (1) pouvant se lier à une interface complémentaire présente sur des engins agricoles, comme par exemple un tracteur, et le dispositif présentant au moins une unité de nettoyage (2) pouvant se poser sur la surface à nettoyer, où l'unité de nettoyage (2) fonctionne en association avec au moins une unité de compensation de charge (4) au moyen de laquelle la charge à appliquer sur la surface à nettoyer est réglable à une valeur présélectionnable, et où le dispositif convient au nettoyage de surface d'installations solaires, d'installations photovoltaïques, de surfaces de verre, et où l'unité de compensation de charge (4) maintient constante la valeur présélectionnée au cours du déplacement du véhicule, **caractérisé en ce que** l'unité de compensation de charge (4) est constituée d'au moins un accumulateur de pression (41) qui fonctionne en collaboration avec un cylindre hydraulique (42), l'accumulateur de pression (41) étant constitué d'un accumulateur de pression hydraulique pouvant être appliqué avec pression au moyen d'un médium pneumatique.

2. Dispositif selon la revendication 1, **caractérisé en ce que** le cylindre hydraulique (42) est lié à l'interface (1) par une articulation (44), préférentiellement au châssis formant l'interface et à l'unité de nettoyage (2), préférentiellement via un bras porteur (31,32) ainsi qu'une articulation de compensation (43) prévue à cet endroit et/ou l'unité de nettoyage (2) est retenue par un bras porteur (31,32) lié de façon souple à l'interface (1), préférentiellement avec une articulation d'interface (34) installée sur l'interface.

3. Dispositif selon l'une des revendications précédentes, **caractérisé en ce que** sont prévus comme médium hydraulique de l'huile hydraulique et comme médium penumatique de l'air comprimé, de l'azote ou tout gaz similaire, où préférentiellement l'accumulateur de pression (41) comporte un dispositif de réglage de pression pour fixer et/ou régler la pression du médium pneumatique et/ou du médium hydraulique.

4. Dispositif selon l'une des revendications précédentes, **caractérisé en ce qu'**il est prévu au moins un bloc de contrôle et de répartition (45) pour le contrôle et la répartition du médium hydraulique.

5. Dispositif selon l'une des revendications précédentes, **caractérisé en ce que** l'unité de nettoyage (2) comprend une brosse de nettoyage (21) disposée sur un support (24) autour d'un axe ou d'un arbre (23) placé de façon orientable.

6. Dispositif selon l'une des revendications précédentes, **caractérisé en ce qu'**un moteur d'entraînement (22) entraîne la brosse (21) ou **en ce qu'**en tant que moteur d'entraînement (22) est prévu un moteur hydraulique, un moteur électrique, un moteur à combustion ou un moteur pneumatique.

7. Dispositif selon l'une des revendications précédentes, **caractérisé en ce que** l'articulation d'interface (34) est constituée réglable et/ou fixable.

8. Dispositif selon l'une des revendications précédentes, **caractérisé en ce qu'**une articulation du bras porteur (33) est prévue, au moyen de laquelle celui-ci est repliable depuis sa position d'utilisation dans une position de transport ou inversement, et/ou **en ce qu'**un cylindre pivotant (6) est disposé sur le châssis formant l'interface (1), au moyen duquel l'unité de nettoyage (2) ensemble avec le bras porteur (31,32) est pivotable latéralement, c'est-à-dire en position d'utilisation essentiellement horizontalement, une articulation de pivotement (61) étant prévue pour permettre le picotement latéral.

9. Dispositif selon l'une des revendications précédentes, **caractérisé en ce qu'**un cylindre de réglage en hauteur (7) se fixe sur le bras porteur (31,32) et sur le châssis formant l'interface (1), pour le déplacer essentiellement verticalement ensemble avec l'unité de nettoyage (2).

10. Dispositif selon l'une des revendications précédentes, **caractérisé en ce que** le dispositif (1) peut se lier à un réservoir de liquide pour en extraire un liquide de nettoyage et/ou d'hydrofugation sur la surface à nettoyer et/ou l'unité de nettoyage (2).

11. Dispositif selon l'une des revendications précédentes, **caractérisé en ce que** le réservoir de liquide est prévu comme élément de remorquage ou comme élément de couplage ou resp. élément remorqué.

12. Dispositif selon l'une des revendications précédentes, **caractérisé en ce qu'**est prévu un dispositif de collecte et/ou de préparation sur le réservoir de liquide, qui collecte le liquide de nettoyage encrassé et préférentiellement le prépare à sa réutilisation.

13. Engin agricole, comme un tracteur, avec une interface universelle (1) comme un couplage de remorque à trois points ou un triangle de remorque à changement rapide et avec au moins un dispositif selon l'une des revendications précédentes.
